# EUROPEAN PATENT APPLICATION

(11) **EP 4 786 025 A1**
(43) Date of publication of application: **05.08.2026**
(21) Application number: 24881831.2
(22) Date of filing: 19.10.2024
(51) Int. Cl.: B01D 21/24, F04B 23/02, A47L 11/30, B08B 5/04, C02F 11/00

(54) **SUCTION-IMPELLING DEVICE FOR SLUDGE AND/OR EFFLUENTS IN A CONTINUOUS CYCLE**

(30) Priority: 24.10.2023 ES 202331883 U
(71) Applicant: Garcia Argüelles, Jesus Angel, 33430 Candas Carreno Asturias (ES)
(72) Inventor: Garcia Argüelles, Jesus Angel, 33430 Candas Carreno Asturias (ES)
(86) International application number: PCT/ES2024/070640
(87) International publication number: WO 2025/088232

(57) **Abstract**

Sludge transfer equipment, of a continuous working cycle, consisting of a tank (1) having a filling or suction circuit (A) and another emptying or impulsion circuit (D). A vacuum pump (4) creates a depression in the tank, through the duct (V), which causes the product to be suctioned from the outside. When the sludge reaches a determined level, the impulsion circuit valves (V1, V2, and V3) open simultaneously and the pumping group is activated, starting the emptying of the tank simultaneously with its filling. When the emptying reaches a determined level, the valves will close and the pumping group will stop until the determined filling level is reached again and the emptying cycle simultaneous to the filling cycle starts again in an uninterrupted manner. The electronic control device acts automatically on the valves (V1-V3), valve V2 of the circuit connecting the tank (1) and the discharge circuit (D), the vacuum pump (4), and the pumping group (3). The main objective is to maintain the tank pressure in an appropriate operating range, allowing both suction and impulsion in a continuous cycle.

## Description

### Technical Sector

The object of the invention is equipment for suctioning sludge and/or effluents that typically accumulate within production facilities, and their impulsion from the place where they are produced to a pond, tanks, or treatment plants, in a continuous manner without interruption between suction and impulsion, i.e., in a continuous working cycle.

### Background of the Invention

The extraction of residual sludge and/or effluents accumulated inside production equipment and its subsequent transport for deposit or appropriate treatment, carried out by means of classic suction-impulsion vehicles, presents major drawbacks: It is necessary to stop the sludge suction to carry out their evacuation or transfer; to work continuously, a minimum of 2 vehicles is required, which represents a high cost, in addition to lower performance due to the coupling and decoupling of the tanks.

Document ES 2 142 193 describes a mobile sludge and/or effluent suction-impulsion equipment consisting of two sludge and/or effluent receiving tanks that are to be filled by means of a vacuum pump that creates a depression and allows the tank to be filled with sludge suctioned from the outside. Once a determined level is reached, an inversion of the on-off valves of the equipment occurs, the full tank is pressurized and emptied. Meanwhile, through that same valve inversion, the other tank begins to fill by means of the vacuum pump up to a pre-established and controlled level. Filling and emptying cycles are repeated continuously. The pump itself, which creates a vacuum in one tank absorbing the sludge, acts as an impeller for the sludge in the other tank, as theoretically the gases absorbed from the first are introduced into the second under pressure.

Document ES 2 527 968 describes a continuous working cycle sludge transfer equipment consisting of two tanks, each of which has a filling or suction circuit, and another emptying or impulsion circuit. A vacuum pump creates a depression in the first of the tanks that causes the product to be suctioned from the outside while said tank does not reach a certain level; meanwhile, the other tank is being pressurized by means of a compressor coupled in an impulsion circuit independent of the vacuum circuit, to ensure that said tank is emptied and that the sludge is driven towards an outlet duct at the appropriate distance and height. When the first tank is full, the suction circuit valves of said tank close automatically and the emptying circuit valves open, while the filling 1/1 circuit of the other tank opens and the emptying circuit closes. The main difference with the equipment described in document ES 2 142 193 is that the vacuum and pressurization, i.e., the suction and impulsion of the sludge, is carried out by means of an independent depressor (vacuum pump) and compressor.

### Explanation of the Invention

The equipment of the invention consists of a tank with a single filling or suction circuit and a single emptying or impulsion circuit. Suction is carried out by means of a vacuum pump to the single tank without the need for on-off valves, simplifying the circuit, avoiding leaks, and improving performance.

Impulsion is carried out by means of a pump through a single discharge circuit, without pressurizing the tank. For the correct operation of the pump, the discharge circuit is connected to the upper part of the tank, above the filling level. This allows pressures to be balanced and potential air bubbles that may occur in the pump body while it is stopped to be eliminated. The suction circuit (A) and the sludge discharge circuit (D) are controlled by valves, but not the air absorption duct (V) for creating the vacuum, where it is not necessary.

The vacuum pump creates a depression in the single tank that causes it to fill to a certain level. Once full, valve V1 of the discharge circuit (D) opens and the pump is started, venting valve V2 opens in a timed manner and then valve V3 opens to proceed with the emptying of the sludge to the preset minimum level; then, the operation of the pump is interrupted and the valves return to their rest position.

All these changes are carried out through the action of automatic valves, which are governed by an electronic control, which defines the sequence in which they are to be opened or closed automatically starting from the filling level, repeating this sequence constantly; while the tank fills, it is emptied simultaneously.
The advantages of the proposed system in relation to the current equipment operating in this field are the following:
- **Lower equipment acquisition cost** by operating with a single tank. The cost is lower than the double tank system since one tank and its corresponding maneuver valves, levels, etc., are eliminated.
- **Lower installed electric power.** With the dual system (2 tanks), when changing tanks, a vacuum must be created again every time the emptying is finished. With the proposed system, the vacuum is maintained throughout the entire work process.
- **Lower volume of waste generation** in the liquid ring system of the vacuum pump. The water in the vacuum pump becomes contaminated with acid vapors and must be replaced. As the vacuum pump is smaller, the volume of water in the cooling circuit is smaller.
- **Lower volume of acid vapor generation** emitted into the atmosphere.
- **Lower installed power** in the cooling circuit, recirculation pump, and electric fan.
- **Greater operational reliability** by reducing the number of circuits and valves required.
- **Safer process** by not pressurizing the tank for impulsion, as occurs with other systems.
- **Higher impulsion performance** not limited by pressurization as an impeller.
- **Greater suction capacity** due to lower losses.
- **Lower CO2 emissions (carbon footprint)** due to the considerable reduction of materials and components required for its construction.
- **Better energy efficiency,** lower power with better performance.

### Description of the drawings

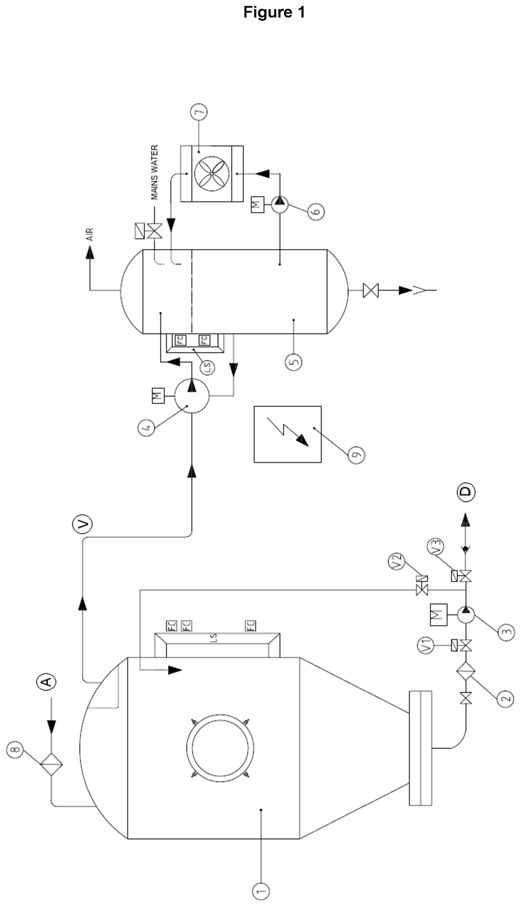

To complement the description being made and with the object of facilitating the understanding of the characteristics of the invention, a drawing is attached in which, for illustrative and non-limiting purposes, the following has been represented: Figure 1 shows the equipment of the invention with a schematic representation of the devices that integrate it, as well as a description of them and numbered for a better explanation and understanding of the operation:
1 Sludge tank
2 Filter for pumping group protection
3 Pumping group
4 Liquid ring vacuum pump
5 Vacuum pump water tank
6 Motor-pump group for cooling the liquid ring
7 Cooling group
8 Pre-filter
9 Power and control cabinet
V1 Valve with pneumatic actuator before the pump
V2 Venting valve with pneumatic actuator
V3 Valve with pneumatic actuator after the discharge circuit pumping group
A Suction circuit
V Vacuum circuit
D Discharge circuit

### Preferred embodiment of the invention

As can be observed in Figure 1, the continuous cycle sludge and/or effluent suction-impulsion equipment includes an airtight tank (1), with a conical bottom, suitable for creating a vacuum inside it, which is filled and emptied simultaneously through two ducts: sludge inlet circuit (A) and sludge discharge circuit (D).

The filling of the tank is carried out by vacuum suction through the vacuum circuit (V) by means of a liquid ring vacuum pump. The sludge inlet duct (A) allows the filling of the tank. When the tank is filling and reaches a certain level, valves (V1, V2, and V3) of the discharge circuit (D) open and the pumping group (3) is activated, starting the emptying and impulsion of the sludge simultaneously with the suction and filling of the tank. After a few seconds, V2 closes. Once the tank has been emptied to a determined level, valves V1 and V3 close, and sludge suction continues until the determined filling level is reached again, starting the emptying cycle again with the opening of valves V1, V2, and V3 and the pumping group (3).

These are double-acting valves that open or close the duct on which they are installed. The equipment has an electrical power, control, and safety panel, as well as an electropneumatic one composed of solenoid valves and air pipes to the maneuver valves.

Having sufficiently described the nature of the invention, as well as an example of preferred embodiment, it is stated for the appropriate purposes that the materials, shape, size, and arrangement of the described elements may be modified, provided that this does not imply an alteration of the essential features of the invention that are claimed below.

## Claims

1. Sludge transfer equipment, of a continuous working cycle, comprising:
• An airtight tank (1), with a conical bottom, suitable for creating a vacuum inside it, which is filled and emptied simultaneously through an inlet duct and a sludge outlet duct;
• A sludge inlet duct (A), which is branched to the tank (1) for its filling;
• A sludge outlet duct (D), which incorporates a pumping group connected with two branches to the tank (1) and controlled by valves V1, V2, and V3, for simultaneous sludge emptying;
• An air absorption duct (V) that incorporates a liquid ring vacuum pump (4) with its corresponding cooling circuit that creates a vacuum in the tank (1) for sludge suction;
• An electronic control device for the equipment, which incorporates respective level sensors as a means of detecting the filling status of the tank, based on which it generates control signals for the operation of all valves (V1, V2, and V3) and the pumping group in charge of arranging the emptying, opening the impulsion and sludge outlet duct, simultaneously with the filling of the tank.

2. Equipment, according to claim 1, **characterized in that** all outlet ducts are each controlled by a double-acting valve that opens or closes the duct on which it is installed (V1, V2, and V3).

3. Equipment, according to claim 1, **characterized in that** the aspiration or suction is performed through the installation of a liquid ring vacuum pump.

4. Equipment, according to claim 1, **characterized in that** the impulsion of the product from the tank is carried out by means of a pumping group.
